# EUROPÄISCHE PATENTSCHRIFT

(11) **EP 1 445 598 B1**
(45) Veröffentlichungstag und Bekanntmachung des Hinweises auf die Patenterteilung: **12.11.2008**
(21) Anmeldenummer: 04002207.1
(22) Anmeldetag: 02.02.2004
(51) Int. Cl.: G01N 3/42

(54) **Härteprüfgerät**
Hardness testing device
Dispositif d'essai de dureté

(30) Priorität: 04.02.2003 DE 10304369
(43) Veröffentlichungstag der Anmeldung: 11.08.2004
(73) Patentinhaber: KB Prüftechnik GmbH, 69469 Weinheim (DE)
(72) Erfinder: Beisel, Peter, 69469 Weinheim (DE); Kessler, Claus, 67105 Schifferstadt (DE)
(74) Vertreter: Zellentin, Wiger

(56) Entgegenhaltungen:
- EP-A- 0 421 606
- WO-A-99/49347
- DE-A- 10 207 566
- DE-C- 542 371
- US-A- 4 945 490
- US-A- 5 483 821
- PATENT ABSTRACTS OF JAPAN Bd. 0092, Nr. 32 (P-389), 18. September 1985 (1985-09-18) & JP 60 088350 A (SHIMAZU SEISAKUSHO KK), 18. Mai 1985 (1985-05-18)

## Beschreibung

Die vorliegende Erfindung betrifft ein Härteprüfgerät zur Messung der Härte von metallische Werkstoffe insbesondere nach Brinell.

Bei dieser Härteprüfung wird eine Metallkugel definierter Härte und definierter Größe mit einer bestimmten Kraft in die Oberfläche eines Prüfkörpers gedrückt. Dabei entsteht im Prüfkörper ein runder vertiefter Abdruck (Kalotte), dessen Durchmesser ein Maß für die Härte der zu prüfenden Materiale ist. Bei der Messung nach Vickers wird statt einer Kugel ein Pyramidenkörper in das Metall eingedrückt.

Nach dem Herstellen des Eindruckes wird die das Eindringen bewirkende Mechanik weggeschwenkt, ein Objektiv über die Vertiefung gebracht und der Eindruck über dieses Objektiv z. B. auf einer skalierten Mattscheibe abgebildet um ihn zu vermessen.

Die Genauigkeit des Ausmessens hängt von der verwendeten Optik und der Prüfkörperbeleuchtung ab. Beim Eindringen der Kugel verdrängt diese nämlich am Rand des Eindrucks Material und baut somit einen Wall auf. In der Höhe der Prüfkörperoberfläche entsteht hierbei eine relativ kleine Kante, die es aber zu erfassen gilt. Die Eindruckoberfläche ist relativ glatt, der Wall naturgemäß weniger. Mit den üblichen Objektiven mit relativ starker Vergrößerung läßt sich die umlaufende Kante bei harten Materialien ausreichend gut abbilden, verwendet man jedoch Objektive mit gegen 1 gehender Vergrößerung, so wird die trennscharfe Abbildung aufgrund der Lichtführung der Beleuchtung durch das Objektiv unmöglich, weswegen Kameras zur Ausmessung nicht verwendet werden können. Dies liegt im wesentlichen daran, so dass der Übergang zum Ringwall nicht mehr ausreichend kontrastreich ausgeleuchtet werden kann. Bei Strahlen ist dieser Effekt um so ausgeprägter je weicher das Material ist.

Die Schrift EP 0 421 606 A zeigt eine Vorrichtung zur Härteprüfung nach Vickers, wobei der Prüfkörper entweder mit Auflicht (Hellfeld) oder mit schrägem Licht unter einem bestimmten Winkel (Dunkelfeld) beleuchtet werden kann. Die Dunkelfeld-Beleuchtung dient zum unterdrücken von Artefakten, die durch Reflektion von der Probenoberfläche erzeugt werden.

Aus der Schrift WO 99/49347 A ist eine Beleuchtungsvorrichtung bekannt, mit einem Lichtschacht, in welchem oben ein Kranz von Leuchtkörpern eingeordnet ist, und wobei sich nahe der Unterkante eine Reflexionsfläche befindet, welche mit der optischen Achse einen Winkel von etwa 10-50° einschliesst. Diese Vorrichtung wird zum Lesen von Indizien, insbesondere auf reflektiven Oberflächen, angewendet.

Die Erfindung hat sich daher die Aufgabe gestellt, ein Härteprüfgerät der eingangs geschilderten Art zu schaffen, bei welchem die Abbildung des Eindrucks auch dann randscharf und reproduzierbar gelingt, wenn Objektive ohne, oder nur mit geringer Vergrößerung (von z. B. 1-10) verwendet werden.

In einer Weiterentwicklung soll diese Lösung dazu verwendet werden, eine digitale Meßwerterfassung z.B. mit Hilfe einer Digitalkamera zu ermöglichen.

Die Lösung dieser Aufgabe gelingt mit einem Härteprüfgerät zur Messung der Härte von Metallen nach Brinell bestehend aus einer genormten, auf dem Prüfkörper aufliegenden Kugel oder einem Pyramidenkörper und einer Mechanik, die diese mit vorgegebener Kraft in die Metalloberfläche eindrückt, sowie einer Optik zur Vermessung der beim Eindringen entstandenen Kalotte, wobei das Objektiv von einem Lichtschacht umgeben ist, in welchem oben ein Kranz von Leuchtkörpern eingeordnet ist, und sich nahe der Unterkante des Objektivs eine Reflexionsfläche befindet, die mit der optischen Achse einen Winkel von etwa 10-50° einschließt.

Mit einer solchen Anordnung gelingt überraschenderweise eine randscharfe Abbildung der Kalotte genau am Übergang zwischen dem Kugeleindruck und dem von dieser verursachten Wall, so daß diese Ergebnisse auch reproduzierbar sind und Objektive verwendet werden können, wie sie für Kameras erhältlich sind.

Es ist damit auch möglich, digitale Kameras (CCD Kameras) zu verwenden, bei denen die Abbildung auf dem Chip in der Größenordnung des Kalottendurchmessers liegt.

Besonders gute Ergebnisse werden erhalten, wenn die Leuchtkörper am oberen Ende des Schachtes gerichtetes Licht mit verhältnismäßig geringem Öffnungswinkel an der Lichtquelle aussenden.

Grundsätzlich kann dabei auch die innere und äußere Schachtwand geschwärzt sein, um durch Mehrfachbrechung an den Schachtwänden entstehendes Diffuslicht zu vermeiden, so daß die Kalotte nur von Licht beleuchtet wird, das vom Reflektor zur Kalotte gelenkt wird.

Der Schacht kann auch spiegelnd oder verspiegelt ausgeführt sein, um die Lichtausbeute zu steigern.

Der Winkel des Reflektors ist dabei zur Mittelachse des Objektives so eingestellt, daß die Winkelhalbierende zwischen dem vom Reflektor und der Kalotte (am oberen Rand) senkrecht auf dieser steht, was im Anwendungsfall dem oben genannten Winkelbereich von 10-50 °, vorzugsweise 20 bis 40 ° entspricht.

Die Lichtquelle ist hierbei vorzugsweise ein Kranz von Leuchtdioden (LED) oder eine Kaltlichtquelle oder sie besteht aus optischen Glasfasern, die (von oben) in den Schacht hineinleuchten.

In besonders eleganter Weise ist der Schacht ein Vollglaskörper, mit einer oberen Aufnahme für die Lichtquelle, wobei der oben erwähnte Winkel für den Reflektor eine Totalreflexion ermöglicht, so daß seitlich am Glaskörper kein Streulicht austritt, welches die Randschärfe der Kalottenabbildung beeinträchtigen könnte.

Besonders geeignet ist wegen der leichten Bearbeitbarkeit Kunststoffglas, wobei die Außenfläche des Reflektorbereiches auch verspiegelt sein kann.

Der Schacht überragt das Objektiv nach unten, um eine Abschattung durch das Objektiv zu vermeiden und um eine zusätzliche Abschirmung gegen unerwünschten Lichteinfall zu bewirken.

Dieser Schacht kann gegenüber dem Objektiv verschieblich ausgebildet sein, um die Ausleuchtung der Kalotte zu optimieren. Eine weiter Möglichkeit zur Optimierung besteht darin, den Reflektor gekrümmt auszubilden, um damit reflektierte Lichtstrahlen zu bündeln, d. h. möglichst exakt auf die Abdruckkante auszurichten.

Letztlich sei erwähnt, dass die erfindungsgemäße Art der Objektbeleuchtung auch mit einer herkömmlichen, durch das Objektiv erfolgenden, kombiniert werden kann, was dazu führt, dass sowohl der Rand, als auch der Wall kontrastscharf ausgeleuchtet und erfasst werden können.

Anhand der beiliegenden Figuren wird die vorliegende Erfindung näher erläutert. Dabei zeigen
Figur 1 die erfindungsgemäße Anordnung
Figur 2 und
Figur 3 mit dieser aufgenommenen Fotografien von Brinell eindrücken

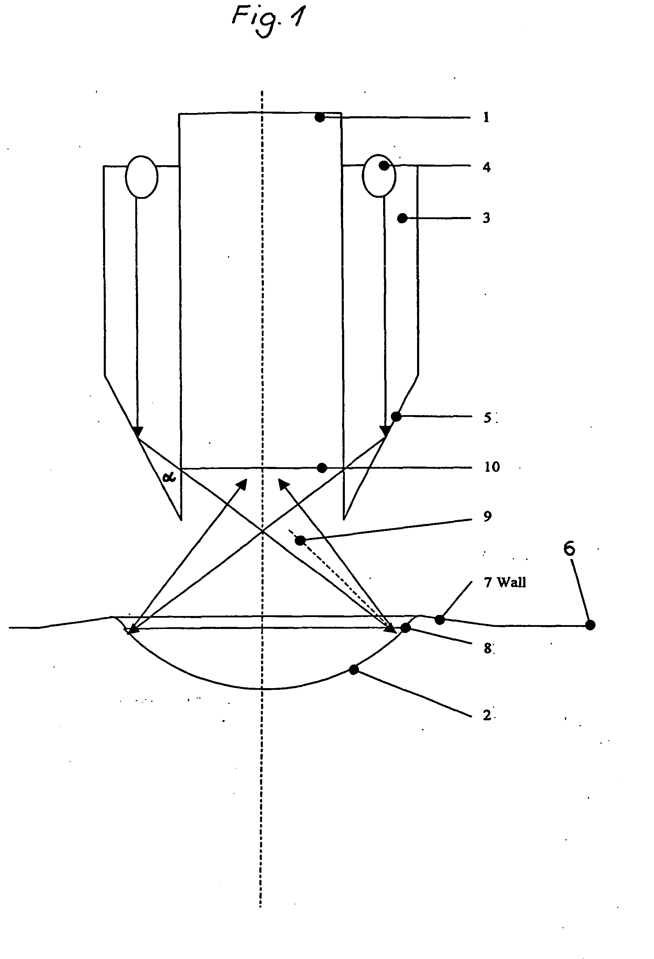

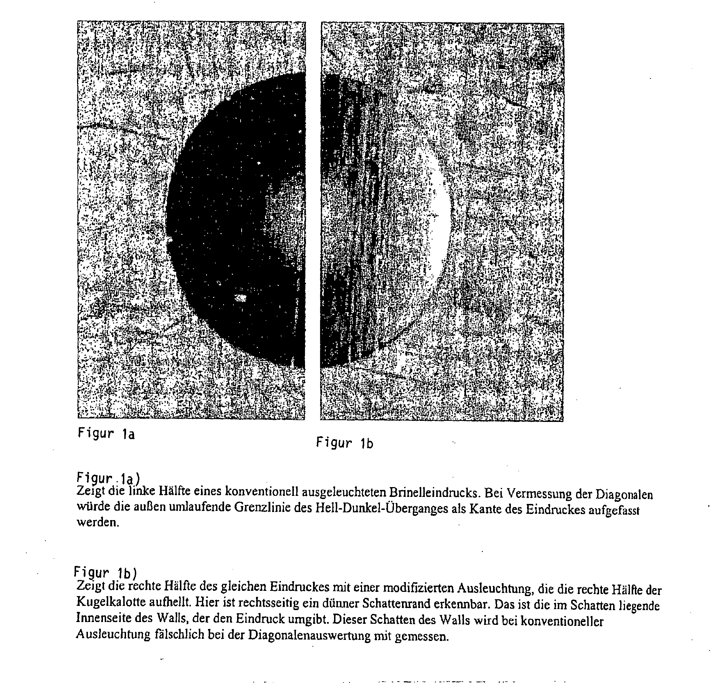

**Figur 1** zeigt unten den Prüfkörper 6 mit der von einer Brinellkugel erzeugten Kalotte 2.

Neben der Kalotte läuft der ringförmige Wall 7 um, zwischen dem Kalottenabdruck und dem Wall 7 liegt die in der oberen Ebene des Prüfkörpers 6 angedeutete Kante 8, welche mit dem oberen Rand der Kugelberührung zusammenfällt.

Oberhalb dieser Kalotte 2 ist ein Objektiv 1 angedeutet, dieses weist insbesondere keine, oder nur eine geringere Vergrößerung auf, so daß es für digitalfotografische Zwecke eingesetzt werden kann.

Das Objekt 1 ist umfaßt von einem Lichtschacht 3, in welchem oben ein Kranz von Leuchtkörpern 4 angeordnet ist, die vorzugsweise Leuchtdioden sind. Dieser Lichtschacht 3 kann das Objektiv 1 als hohler Ringraum umgeben, wobei die Außenwandung am unteren Ende einen trichterförmigen Reflektor 5 aufweist, der das Objektiv 1 vorzugsweise nach unten überragt. Der Winkel α zur Mantelfläche des Objektivs 1 beträgt etwa 20-40 ° bei einem üblichen Objektivdurchmesser von 24 mm und einem Objektabstand von bis zu 30, bzw. 5-6 mm.

Der Winkel α ist dabei so gewählt, daß die Winkelhalbierende 9 zwischen dem von der Reflexionsfläche 5 ausgehenden und von der Kante 8 zur Frontlinse 10 des Objektivs 1 senkrecht zur Tangente der Kalottenwandung steht.

Dieser Lichtschacht kann insbesondere ein Vollkunststoffglaskörper sein, dessen unteres Ende ein Prisma mit Totalreflexion ist zur Umlenkung des von der Lichtquelle (Diode) 9 ausgehenden Lichtstrahls zur Kalotte 2 hin. Die Schachtbreite, d.h. der Abstand zwischen der inneren und der äußeren Mantelfläche beträgt etwa 2 bis 6 vorzugsweise 4 mm.

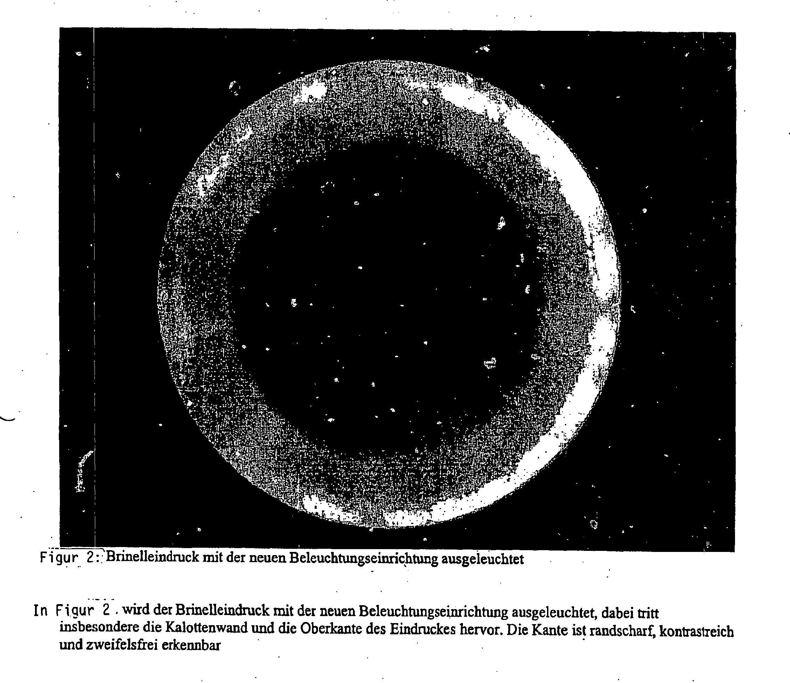

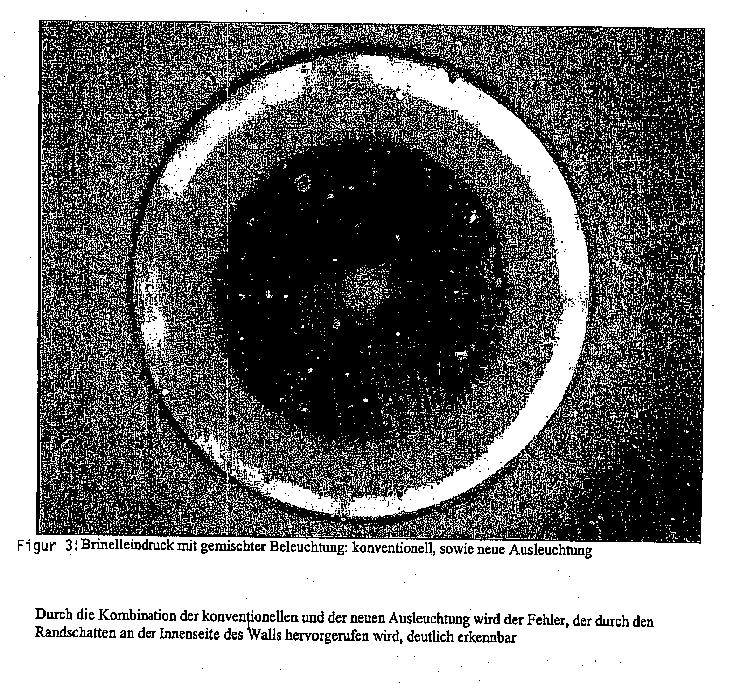

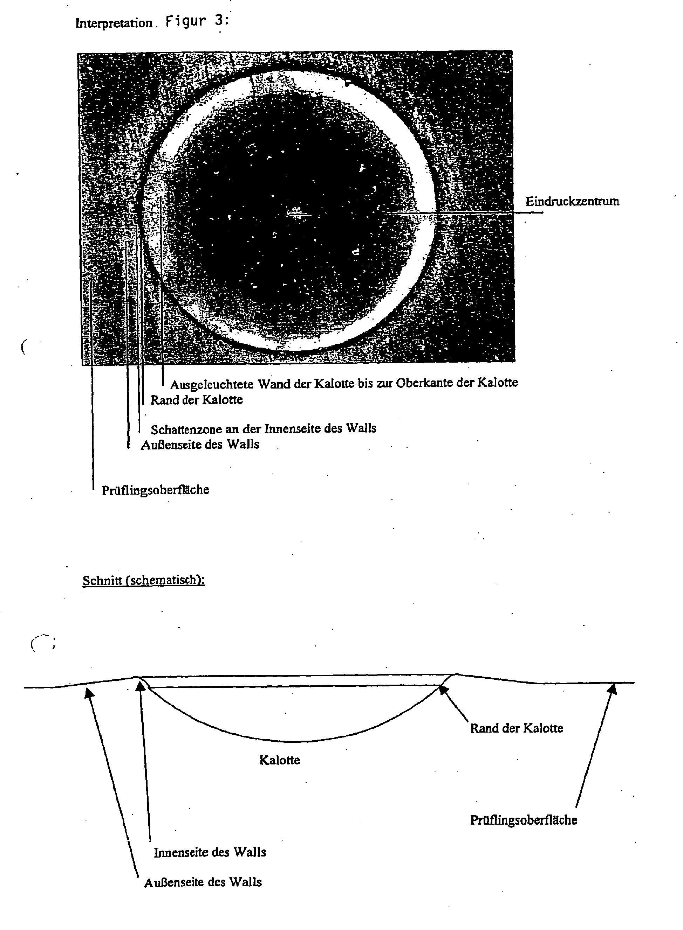

Die weiterhin beiliegenden Abbildungen 1-3 sowie die Interpretation zu Bild 3 zeigen mit Hilfe einer CCD Kamera hergestellte digitale Abbildungen, die den Unterschied zum Stand der Technik (1 a) veranschaulichen.

### Bezugszeichenliste

- 1: Objektiv
- 2: Kalotte
- 3: Lichtschacht
- 4: Leuchtkörper
- 5: Reflexionsfläche
- 6: Prüfkörper
- 7: Wall
- 8: Kante
- 9: Winkelhalbierende
- 10: Frontlinse

## Patentansprüche

1. Härteprüfgerät zur Messung der Härte von Metallen nach Brinell bestehend aus einer genormten, auf dem Prüfkörper aufliegenden Kugel und einer Mechanik, die diese mit vorgegebener Kraft in die Metalloberfläche eindrückt, sowie einem Objektiv (1) zur Vermessung des beim Eindringen entstandenen Eindrucks (2), **dadurch gekennzeichnet, dass** das Objektiv umgeben von einem Lichtschacht (3) ist, in welchem oben ein Kranz von Leuchtkörpern (4) eingeordnet ist, und nahe der Unterkante des Objektivs (1) sich eine Reflexionsfläche (5) befindet, welche mit der optischen Achse des Objektivs (1) einen Winkel von etwa 10-50°, vorzugsweise 20-40°, einschließt, zur randscharfen Darstellung des Überganges zwischen Kugelkalotte und dem diese umgebenden Wall (7).

2. Härteprüfgerät nach Anspruch 1, **dadurch gekennzeichnet, dass** das Objektiv (1) an eine Digitalkamera angeschlossen ist.

3. Härteprüfgerät nach Anspruch 1 oder 2, **dadurch gekennzeichnet, dass** die Leuchtkörper (4) ein im Wesentlichen gerichtetes Licht aussenden.

4. Härteprüfgerät nach Anspruch 1-3, **dadurch gekennzeichnet daß** die Leuchtkörper (4) Dioden oder ein Kranz von Glasfaserkabeln sind.

5. Härteprüfgerät nach Anspruch 1-4, **dadurch gekennzeichnet, das** der Schacht ein Glaskörper ist, an dessen Reflexionsfläche (5) das Licht unter Totalreflexion gebrochen wird.

6. Härteprüfgerät nach Anspruch 5 **dadurch gekennzeichnet, dass** die Reflexionsfläche von außen verspiegelt ist.

7. Härteprüfgerät nach Anspruch 2-6, **dadurch gekennzeichnet, dass** die Kamera zur Erzeugung digitaler Meßergebnisse an einen Rechner angeschlossen ist.

8. Härteprüfgerät nach Anspruch 1-6, **dadurch gekennzeichnet, dass** der Lichtschacht (3) gegenüber dem Objektiv (1) verschieblich an diesen gehalten ist.

9. Härteprüfgerät nach Anspruch 1-8, **dadurch gekennzeichnet, dass** die Reflexionsfläche (5) gekrümmt ist.

10. Verfahren zur Erfassung der Grenze eines Brinelleindruckes durch Ausleuchtung des Eindruckes (2) mit einer Beleuchtung über einen auf den Eindruck (2) gerichteten Strahlengang und Vermessung des Eindrucks (2) mit Hilfe eines Objektivs (1), **dadurch gekennzeichnet, dass** man mit Hilfe eines Kranzes von Leuchtkörpern (4) einen das Objektiv (1) umgebenden Lichtschacht (3) durchleuchtet und das Licht nahe der Unterkante des Objektivs an einer Reflexionsfläche (5) reflektiert, welche mit der optischen Achse des Objektivs einen Winkel von etwa 10-50°, vorzugsweise von 20-40°, einschließt und derart den Übergang zwischen Kugeleindruck und dem diesen umgebenden Wall (7) randscharf darstellt.

11. Verfahren nach Anspruch 10, **dadurch gekennzeichnet, dass** das Objektiv (1) an eine Digitalkamera angeschlossen ist.

12. Verfahren nach Anspruch 10 oder 11, **dadurch gekennzeichnet, dass** die Leuchtkörper (4) ein im Wesentlichen gerichtetes Licht aussenden.

13. Verfahren nach Anspruch 10-12, **dadurch gekennzeichnet, dass** die Leuchtkörper (4) Dioden oder ein Kranz von Glasfaserkabeln sind.

14. Verfahren nach Anspruch 10-13, **dadurch gekennzeichnet dass** der Schacht ein Glaskörper ist, an dessen Reflexionsfläche (5) das Licht unter Totalreflexion gebrochen wird.

15. Verfahren nach Anspruch 10-14. **dadurch gekennzeichnet, das** die Reflexionsfläche von außen verspiegelt ist.

16. Verfahren nach Anspruch 10-15, **dadurch gekennzeichnet, dass** die Kamera zur Erzeugung digitaler Meßergebnisse an einen Rechner angeschlossen ist.

17. Verfahren nach Anspruch 10-16, **dadurch gekennzeichnet, dass** der Lichtschacht (3) gegenüber dem Objektiv (1) verschieblich an diesen gehalten ist.

18. Verfahren nach Anspruch 10-17. **dadurch gekennzeichnet, dass** die Reflexionsfläche (5) gekrümmt ist.

## Claims

1. Hardness testing device for measuring the hardness of metals according to Brinell, composed of a standardized sphere bearing on the test body, and a mechanism which presses this with a prescribed force into the surface of the metal, and an objective (1) for measurement of the indentation (2) arising during the impression, **characterized in that** the objective is surrounded by a light shaft (3), in the top of which an annulus of light bodies (4) is arranged, and that in the vicinity of the lower edge of the objective (1) a reflective surface (5) is located, which encloses an angle of approximately 10-50°, preferably 20-40°, with the optical axis of the objective (1), for sharp-edged representation of the transition between spherical cap and the bulge (7) surrounding it.

2. Hardness testing device according to Claim 1, **characterized in that** the objective (1) is attached to a digital camera.

3. Hardness testing device according to Claim 1 or 2, **characterized in that** the light bodies (4) emit an essentially directed light.

4. Hardness testing device according to Claim 1 to 3, **characterized in that** the light bodies (4) are diodes or an annulus of fiber optic cables.

5. Hardness testing device according to Claim 1 to 4, **characterized in that** the shaft is a glass body on whose reflective surface (5) the light is refracted by total reflection.

6. Hardness device according to Claim 5 **characterized in that** the reflective surface has a reflective metal-coating applied from the outside.

7. Hardness testing device according to Claim 2 to 6, **characterized in that** the camera is connected to a computer for creating digital measurement results.

8. Hardness testing device according to Claim 1 to 6, **characterized in that** the light shaft (3) is attached movably with respect to the objective (1).

9. Hardness testing device according to Claim 1 to 8, **characterized in that** the reflective surface (5) is curved.

10. Method for recording the border of a Brinell indentation by illumination of the indentation (2) with a lighting using a beam path directed on the indentation (2) and measurement of the indentation (2) using an objective (1), **characterized in that** a light shaft (3) surrounding the objective (1) is illuminated using an annulus of light bodies (4), and the light is reflected in the vicinity of the lower edge of the objective on a reflective surface (5) which encloses an angle of approximately 10 - 50°, preferably 20 - 40°, with the optical axis of the objective and thus represents sharp-edged the transition between the sphere indentation and the bulge (7) surrounding it.

11. Method according to Claim 10, **characterized in that** the objective (1) is attached to a digital camera.

12. Method according to Claim 10 or 11, **characterized in that** the light bodies (4) emit an essentially directed light.

13. Method according to Claim 10 to 12, **characterized in that** the light bodies (4) are diodes or an annulus of fiber optic cables.

14. The method according to Claim 10 to 13, **characterized in that** the shaft is a glass body on whose reflective surface (5) the light is refracted by total reflection.

15. Method according to Claim 10 to 14, **characterized in that** the reflective surface has a reflective metal-coating applied from the outside.

16. Method according to Claim 10 to 15, **characterized in that** the camera is connected to a computer for creating digital measurement results.

17. Method according to Claim 10 to 16, **characterized in that** the light shaft (3) is attached movably with respect to the objective (1).

18. Method according to Claim 10 to 17, **characterized in that** the reflective surface (5) is curved.

## Revendications

1. Dispositif d'essai de dureté pour mesurer la dureté de métaux selon Brinell, constitué d'une bille normalisée reposant sur l'échantillon et d'une mécanique qui presse celle-ci dans la surface du métal avec une force prédéterminée, ainsi que d'un objectif (1) destiné à mesurer l'empreinte (2) créée lors de la pénétration, **caractérisé en ce que** l'objectif est entouré par un puits de lumière (3) dans lequel est disposée en haut une couronne de corps lumineux (4) et dans lequel se trouve une surface de réflexion (5) près du bord inférieur de l'objectif (1), laquelle comprend avec l'axe optique de l'objectif (1) un angle d'environ 10 à 50 °, de préférence de 20 à 40 °, pour la représentation nette sur les bords du passage entre la calotte de la bille et la levée (7) entourant celle-ci.

2. Dispositif d'essai de dureté selon la revendication 1, **caractérisé en ce que** l'objectif (1) est raccordé à une caméra numérique.

3. Dispositif d'essai de dureté selon la revendication 1 ou 2, **caractérisé en ce que** les corps lumineux (4) émettent une lumière essentiellement dirigée.

4. Dispositif d'essai de dureté selon l'une des revendications 1 à 3, **caractérisé en ce que** les corps lumineux (4) sont des diodes ou une couronne de fibres optiques.

5. Dispositif d'essai de dureté selon l'une des revendications 1 à 4, **caractérisé en ce que** le puits est un corps en verre sur la surface de réflexion (5) duquel la lumière est réfractée sous réflexion totale.

6. Dispositif d'essai de dureté selon la revendication 5, **caractérisé en ce que** la surface de réflexion est rendue réfléchissante de l'extérieur.

7. Dispositif d'essai de dureté selon l'une des revendications 2 à 6, **caractérisé en ce que** la caméra est raccordée à un ordinateur pour générer des résultats de mesure numériques.

8. Dispositif d'essai de dureté selon l'une des revendications 1 à 6, **caractérisé en ce que** le puits de lumière (3), par rapport à l'objectif (1), est maintenu de manière coulissante sur celui-ci.

9. Dispositif d'essai de dureté selon l'une des revendications 1 à 8, **caractérisé en ce que** la surface de réflexion (5) est courbe.

10. Procédé de détection de la limite d'une empreinte de Brinell par éclairage de l'empreinte (2) avec un éclairage par un trajet de faisceau dirigé sur l'empreinte (2) et par mesure de l'empreinte (2) à l'aide d'un objectif (1), **caractérisé en ce que** l'on transillumine un puits de lumière (3) entourant l'objectif (1) à l'aide d'une couronne de corps lumineux (4) et réfléchit la lumière sur une surface de réflexion (5) près du bord inférieur de l'objectif, laquelle comprend avec l'axe optique de l'objectif un angle d'environ 10 à 50°, de préférence de 20 à 40°, et représente avec netteté sur les bords le passage entre l'empreinte de la bille et la levée (7) entourant celle-ci.

11. Procédé selon la revendication 10, **caractérisé en ce que** l'objectif (1) est raccordé à une caméra numérique.

12. Procédé selon la revendication 10 ou 11, **caractérisé en ce que** les corps lumineux (4) émettent une lumière essentiellement dirigée.

13. Procédé selon l'une des revendications 10 à 12, **caractérisé en ce que** les corps lumineux (4) sont des diodes ou une couronne de fibres optiques.

14. Procédé selon l'une des revendications 10 à 13, **caractérisé en ce que** le puits est un corps en verre sur la surface de réflexion (5) duquel la lumière est réfractée sous réflexion totale.

15. Procédé selon l'une des revendications 10 à 14, **caractérisé en ce que** la surface de réflexion est rendue réfléchissante de l'extérieur.

16. Procédé selon l'une des revendications 10 à 15, **caractérisé en ce que** la caméra est raccordée à un ordinateur pour générer des résultats de mesure numériques.

17. Procédé selon l'une des revendications 10 à 16, **caractérisé en ce que** le puits de lumière (3), par rapport à l'objectif (1), est maintenu de manière coulissante sur celui-ci.

18. Procédé selon l'une des revendications 10 à 17, **caractérisé en ce que** la surface de réflexion (5) est courbe.
